# EUROPEAN PATENT SPECIFICATION

(11) **EP 4 422 968 B1**
(45) Date of publication and mention of the grant of the patent: **04.06.2025**
(21) Application number: 22802106.9
(22) Date of filing: 14.10.2022
(51) Int. Cl.: B63B 27/10, F03D 13/25, B66C 13/06, B66C 23/52, E02D 5/28, E02D 7/02, E02D 27/52, E02D 13/04

(54) **INSTALLATION OF A MONOPILE THAT IS ADAPTED TO SUPPORT AN OFFSHORE WIND TURBINE**
INSTALLATION EINER MONOPILE ZUR UNTERSTÜTZUNG EINER OFFSHORE-WINDTURBINE
INSTALLATION D'UN MONOPIEU ADAPTÉ POUR SUPPORTER UNE ÉOLIENNE EN MER

(30) Priority: 28.10.2021 NL 2029539
(43) Date of publication of application: 04.09.2024
(73) Proprietor: Itrec B.V., 3115 HH Schiedam (NL)
(72) Inventor: VEHMEIJER, Terence Willem August, 3115 HH SCHIEDAM (NL); BRAAKSMA, Jelmer, 3115 HH SCHIEDAM (NL)
(74) Representative: EP&C
(86) International application number: PCT/EP2022/078695
(87) International publication number: WO 2023/072634

(56) References cited:
- WO-A1-2021/058544
- US-A1- 2020 308 796
- US-A1- 2021 047 009
- US-A1- 2021 123 203

## Description

The present invention relates to the field of installation of a monopile that is adapted to support an offshore wind turbine.

For example, in the documents WO2018/117846, WO2019/172752 (fig. 20), WO2019/231329, WO2021/058544, and WO2021/140217 the present applicant has disclosed various vessels for installation of a monopile adapted to support an offshore wind turbine. These known vessels comprises a hull, a crane mounted on the hull, and a motion compensating integrated pile upending and holding device. This device includes a motion compensating support assembly mounted to the hull of the vessel and a pile holder that is supported by the support assembly and is tiltable about horizontal tilt axis relative to the support assembly between a horizontal orientation and a vertical orientation. The pile holder is configured to receive a lower end portion of the monopile in a horizontal orientation thereof and to support the lower end portion. The device is configured to allow for upending of the monopile into a vertical orientation thereof by means of the crane of the vessel whilst the lower end portion remains received and supported by the pile holder. The pile holder is configured to guide the monopile in said vertical orientation, at least as the monopile is being lowered by the crane during landing of the monopile on the seabed. The motion compensating support assembly comprises controllable motion actuators and an associated motion control unit configured for position control of the monopile during landing of the pile on the seabed and/or control of verticality of the monopile during driving of the monopile into the seabed so as to compensate for vessel motion.

When a vessel as disclosed in any of the above referenced documents is used for installation of the monopile, the hull is in floating condition. This is in contrast to jack-up vessels wherein the hull is lifted above the sea when the installation process is performed. A drawback of the jack-up vessel is, for example, the time and effort required for jacking up and down the hull, issues related to soil stability at the installation site, etc.

When a vessel as disclosed in any of the above referenced documents is used for installation of the monopile, with the hull of the vessel in floating condition, the method comprises:
- receiving the lower end portion of a monopile in the pile holder while being in a horizontal orientation,
- upending the monopile by lifting an upper end portion of the monopile by means of the crane while the lower end portion remains received and supported by the pile holder, so that the monopile is upended in vertical orientation thereof,
- lowering the upended monopile by means of the crane whilst being guided by the pile holder so that the monopile is landed on the seabed,
- driving the monopile deeper into the seabed, e.g. involving the use of pile driving equipment.

In WO2019/149674 a vessel for monopile installation has a crane, a dedicated upending device, and a dedicated pile holder device. The monopile is first received, in horizontal orientation, with the lower end portion thereof by the upending device. By operation of the crane, the monopile is then upended. In this process, the pile holder device is arranged to receive therein the lowermost end of the monopile, after which the pile holder is closed about the monopile. Then the upending device is released from the monopile. Motion compensation is provided in order to hold the upended monopile in a substantially fixed position relative to the underwater bottom in a horizontal plane.

In the field, monopiles of a length of 100 meters or more, diameter of 10 meters or more, and with a mass of more than 1000 tonnes, even above 2000 tonnes, are not uncommon.

As discussed in, for example, WO2019/231329 handling of such an enormous monopile, is a demanding task. In particular, in document WO2019/231329 it is discussed that during upending of the monopile extreme loads may be caused on the crane and the motion compensating integrated pile upending and holding device. The support assembly of the latter is configured to maintain a predetermined X-Y location of the pile holder independent of vessel motion. It is proposed therein, to make use of computerized crane control system that is linked to the slew drive, the luffing drive, and the hoisting winch. The computerized crane control system is programmed to perform a routine, providing a coordinated pattern of slew motion of the superstructure and of luffing motion of the boom structure, as well as operation of the hoisting winch, so that the load connector moves along a predefined trajectory, e.g. during upending of the monopile. For example, the computerized crane control system is provided with one or more input devices, e.g. sensors, cameras, to track the position of the monopile and/or to monitor the environment. For example, the control system is configured to dynamically adapt the routine using the information provided by the one or more input devices. For example, the computerised crane control system may adjust the position of the boom and hoisting winch to compensate for titling of the vessel due to a change in load distributed over the working deck. For example, in addition to the computerized crane control system, the crane may be provided with one or more scanners, e.g. cameras, that provide spatial information on objects located in the crane working area.

The present invention aims to improve the existing method and vessel employed for installation of a monopile, e.g. in view of the upending process. For example, the invention aims to reduce and/or avoid (excessive) loads on the crane and/or other equipment involved in the upending and/or to increase the weather window for installation of a monopile.

According to the invention a method according to the preamble of claim 1 is provided. The method is characterized in that during at least a phase of the upending of the monopile, one or more of the controllable motion actuators of the motion compensating support assembly are operated to provide controlled motion of the lower end portion of the monopile so as to reduce or counter swing motion of the monopile.

In a practical embodiment of the upending process, the monopile initially is robustly supported in a horizontally orientation. The monopile is then supported at the lower end thereof by the monopile holder and at one or more locations along the length of the monopile, e.g. at one location near the upper end, by one or more monopile support structures, e.g. cradle structures. The crane, as in many existing vessels, will have its boom arranged such that the crane hook and the monopile lifting tool connected thereto, are suspended from the boom via one or more winch driven cables. The upper end of the monopile is then lifted by means of the crane. The invention is based on the insight that now, effectively, an enormous pendulum is created, as the monopile is at the upper end suspended from the rather lengthy winch driven cables and at is lower end by the monopile holder. For example, when the monopile now extends generally along the roll axis of the vessel, e.g. a monohull vessel, the monopile will now tend to exhibit a swing motion even while being more or less restrained at the lower end portion by engagement with the integrated pile upending and holding device. The swing motion will predominantly be in lateral directions of the lengthy monopile.

The swing motion may be due to, or influenced by, a large variety of factors, such as, for example, sea state induced vessel motion, for example roll and/or pitch, operation of the dynamic positioning system of the vessel (when present), change of load on the hull (e.g. due to movement of center of mass of the monopile), operation of the ballast system of the vessel, wind forces acting on the large monopile and/or on the crane, slew motion of crane during upending, luffing motion of the crane boom during upending, vibrations in the structure of the crane, e.g. in the boom of crane, etc. Due to the enormous mass of the monopile, swing motion of the monopile may result in undue, or even extreme loads, on the crane and/or the motion compensating integrated pile upending and holding device and/or on the monopile itself.

The invention reduces monopile swing motion during upending by suitable operation of the one or more of the controllable motion actuators of the motion compensating support assembly, effectively providing controlled motion of the lower end portion of the monopile in a manner that has the overall effect of reducing the monopile swing motion. For example, the one or more of the controllable motion actuators are operated to follow the natural swing of the monopile, yet in a retarding or braking manner, so dissipating energy from the pendulum system and thereby reducing swing motion of the monopile. For example, the controllable motion actuators comprise a rack-and-pinion mechanism, with one or more motor driven pinions, of which the one or more drive motors, e.g. electric or hydraulic motors, are operated to provide the controlled motion that reduces monopile swing motion during upending. For example, one or more electric motors are operated to provide a retarding effect, so as to dissipate energy from the pendulum system.

For example, the one or more of the controllable motion actuators are operated to bring about a controlled motion of the lower monopile end in a manner that has some analogy to dynamic balancing of an unstable stick.

It is envisaged that effective monopile swing reduction during at least a phase of the upending is achieved when the controlled motion of the lower end portion of the monopile so as to reduce swing motion of the monopile is directly substantially parallel to the tilt axis, e.g. a reciprocating, e.g. periodic, motion. For example, the support assembly comprises a frame, e.g. a subframe, that is movable over one or more rails relative to the hull of the vessel, which rails extend parallel to the tilt axis, wherein the one or more motion actuators operated to counter monopile swing are mounted to move said frame over said rails, e.g. as a rack-and-pinion mechanism, and thus the lower end of the monopile parallel to the tilt axis to counter swing of the monopile.

For example, upending of the monopile about a tilt axis that extends transverse to the hull, e.g. the monohull, of the vessel. Possibly, roll of the vessel may then be a prominent factor in the existence of monopile swing motion during upending. Herein, preferably, the motion actuators of the support assembly cause - during upending - motion of the lower monopile end in direction parallel to the tilt axis in order to counter or reduce the monopile swing. As shown in the mentioned prior art documents, embodiments are also envisaged wherein the tilt axis is oriented differently with respect to the hull, e.g. parallel to the longitudinal axis of the elongated monohull of the vessel. In view of the great and still increasing design length of the monopiles, an arrangement of the monopile in longitudinal direction of the elongated hull of the vessel is preferred, e.g. in view of the coupling of the upper end of the monopile to the crane, e.g. via the lifting tool. An example of a lifting tool is disclosed in WO2018/139918. The latter activity is, preferably, done with the upper end "on deck" instead of several tens of meters outside the port or starboard side of the vessel. As discussed herein, roll of the vessel may then play an important role in the presence of swing of the monopile that is countered or reduced by the present invention.

For example, the described monopile swing reduction is at least performed during a first phase of the upending, e.g. as long as the monopile is more or less horizontal, e.g. angled at less than 40 degrees with respect to horizontal, e.g. starting from the moment of lifting the upper end of the monopile by means of the crane. Yet the phase may also cover a larger angle, e.g. all the way to the upended orientation. The phase may also cover another part of parts of the angle through which the monopile passes during upending.

In an embodiment, the one or more controllable motion actuators are subject to an automated control of their operation so as to reduce monopile swing. For example, the motion control unit is configured, e.g. programmed, to operate the one or more of the controllable motion actuators of the motion compensating support assembly in order to perform an anti-swing routine during at least a part of upending process of the monopile so as to counter or reduce swing motion of the monopile.

In embodiments, a swing motion sensing system is provided that is configured and operated to sense actual swing motion of the monopile, at least during said phase of the upending process of the monopile, which swing motion sensing system is linked to the motion control unit of the motion compensated pile gripper to provide input signal(s) for the anti-swing routine. For example, one or more inertia-based motion sensors are provided, e.g. on the (upper end of) the monopile, and/or on a lifting device engaged with the upper end of the monopile, and/or on a hook of the crane, and/or on the pile holder. For example, one or more cameras are provided and operated to monitor monopile swing motion, e.g. at least having a view from the boom down to the monopile. In general, sensing of actual motion of the monopile during upending may be used as part of a control loop, e.g. a feedback loop, of the motion control unit in the routine to reduce monopile swing.

In embodiments, the motion compensating integrated pile upending and holding device, e.g. the motion compensating support assembly thereof, is provided with one or more position sensors that are linked to the motion control unit, e.g. in view of a position feedback, e.g. in view of position based control of the lower monopile end during upending to reduce swing motion.

In embodiments, the motion compensating integrated pile upending and holding device, e.g. the motion compensating support assembly thereof, is provided with one or more load sensors that sense one or more of loads exerted on the device by the lower monopile end, which load sensors are linked to the motion control unit, e.g. in view of a force feedback, e.g. in view of force based control of the lower monopile end during upending to reduce swing motion. For example, loads are measured in a plane through the axis of the monopile and the tilt axis. For example, strain gauges are provided at one or more locations of the device. For example, hydraulic pressures are monitored in one or more hydraulic actuators of the device, e.g. when the pressure is linked to swing motion of the monopile during upending.

In embodiments, the motion compensating integrated pile upending and holding device is provided with one or more angle measurement sensors that measure the actual tilt angle during upending of the monopile, which sensors are linked to the motion control unit in view of control of the lower monopile end during upending to reduce swing motion. Angle measurement can also be done at different locations and/or in a different manner, e.g. with an angle sensor in the lifting tool, monitoring of the crane operation, etc.

In embodiments, the motion control unit is linked to one or more sensors providing actual data related to one or more of vessel motion (in one or more directions/rotations), vessel position, operation of the dynamic positioning system, vessel stability, operation of the ballast system, etc. For example, when the monopile extends in direction of the roll axis of the vessel during upending, the actual roll of the vessel may be used as input for the motion control unit during upending.

In an embodiment, provision is made for an alarm routine of the control unit, e.g. when sensed actual monopile swing and/or a change in monopile swing over time exceeds a predetermined threshold.

In an embodiment, provision is made for an alarm routine of the control unit, e.g. when predicted wave height exceeds a predetermined threshold.

For example, based on an alarm the upending operation is (automatically) halted, e.g. by halting a slew drive of crane and/or one or more hoist winches of crane. The halting may be ended, for example automatically, as soon as the monopile swing has been reduced to acceptable levels.

In an embodiment, as is known in the art, the support assembly comprises one or more horizontal hull mounted rails mounted on the hull of the vessel, e.g. on a deck thereof, e.g. X - rails extending horizontally and in a longitudinal direction of the hull of the vessel. A subframe is movable over said one or more hull mounted rails. One or more subframe mounted rails are mounted on the subframe and perpendicular to the hull mounted rails, e.g. one or more Y-rails extending horizontally and in transverse direction of the hull of the vessel. A support frame is movable over the subframe mounted rails. The pile holder is tiltable mounted on the support frame to tilt about the tilt axis. The controllable motion actuators of the support assembly are configured to move the subframe over the hull mounted rails and to move the support frame over the subframe mounted rails. For example, in embodiments, only the one or more controllable motion actuators associated with one of the hull mounted rails and the subframe mounted rails is involved in the inventive reduction of monopile swing, e.g. the actuators causing motion of the lower monopile end in direction parallel to the tilt axis.

In embodiments, as is known in the art, the pile holder comprises a ring, or just has a single ring, that is provided with multiple pile engaging devices that are distributed about the circumference of the respective ring, e.g. each pile engaging device comprising one or more pile guiding rollers that are positionable radially relative to the ring, wherein the ring comprises a ring base tiltable relative to the support assembly and one or more movable jaws, e.g. two semi-circular jaws, each jaw being movable between a closed position and an opened position. In the closed position the respective ring may form a closed annulus. The pile holder, preferably, has a single ring. In another embodiment, e.g. as shown in WO2021/058544, the pile holder has an upper ring and a lower ring.

In embodiments, the pile holder is provided with a pile foot end support that is configured to engage with the foot end of a pile in order to limit longitudinal movement of the pile, at least during upending of the pile, e.g. as shown in WO2021/058544

The invention will now be explained with reference to the drawings. In the drawings:

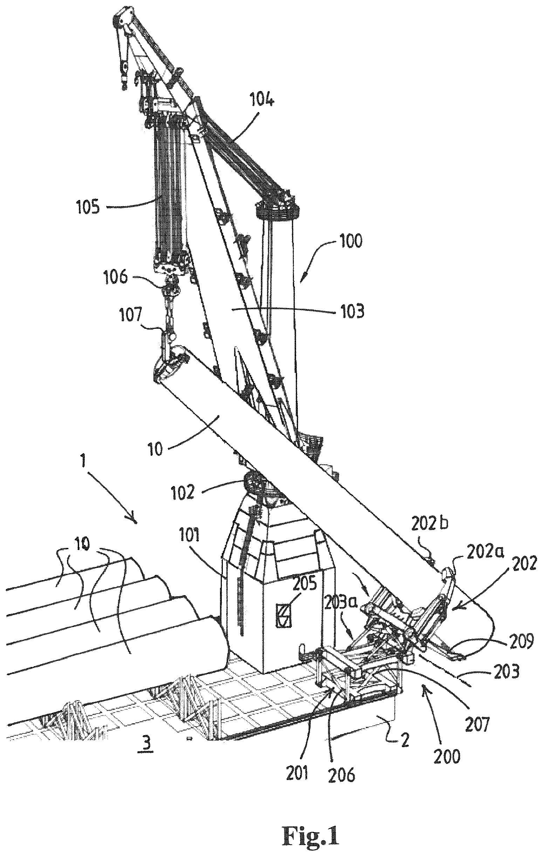

- fig. 1 shows a stern part of a monohull installation vessel in order to illustrate the invention.

In the figure 1 the stern part of a vessel 1 having an elongated monohull 2 is shown.

The vessel 1 has a main deck 3 on which one or more, here multiple, monopile 10 are stored in side-by-side arrangement.

As shown, the monopiles 10 are stored with their longitudinal axis along the length of the hull of the vessel 1.

A crane 100, here embodied as a mast crane yet other designs are also envisaged, is mounted on the hull, here at the stern end of the main deck 3.

In more detail, the crane 100 has a pedestal 101 fixed to the hull 2, a slewable superstructure 102, a slew drive for slewing of the superstructure, a luffable boom 103 mounted on the superstructure, a luffing mechanism 104, and a hoist device comprising one or more winches and winch driven cables 105 that suspended a crane hook 106 from the boom 103. A monopile lifting tool 107 is suspended from the crane hook and engages on the upper end of a monopile.

The vessel 1 is further equipped, here at the stern end of the hull, with a motion compensating integrated pile upending and holding device 200. The depicted embodiment is just one example, shown in more detail in WO2018/117846. As discussed, other embodiments, such as disclosed in any of WO2019/231329, WO2021/058544, and WO2021/140217 are also envisaged, as well as other designs of such device having the relevant characteristics to perform the present invention.

Generally, the device 200 comprises:
- a motion compensating support assembly 201 that is mounted to the hull 2 of the vessel,
- a pile holder 202 that is supported by the support assembly and is tiltable about horizontal tilt axis 203 relative to the support assembly 201 between a horizontal orientation and a vertical orientation.

For example, in view of returning the pile holder 202 after installation of the monopile to the position for receiving a new monopile, one or more tilt actuators 203a can be provided.

The pile holder is configured to receive a lower end portion of the monopile in a horizontal orientation thereof and to support the lower end portion,

The device 200 is configured to allow for upending of the monopile 10 into a vertical orientation thereof by means of the crane 100 of the vessel 1 whilst the lower end portion remains received and supported by the pile holder 202. This upending operation is in progress in the depiction of figure 1.

The pile holder 202 has a single ring provided with multiple pile engaging devices that are distributed about the circumference of the ring, e.g. each pile engaging device comprising one or more pile guiding rollers that are positionable radially relative to the ring. The ring comprises a ring base tiltable relative to the support assembly about axis 203 and movable jaws 202a, b, each jaw being movable between a closed position and an opened position.

The pile holder 202 is configured to guide the monopile 10 in its vertical orientation, at least as the monopile is being lowered by the crane 100 during landing of the monopile on the seabed, preferably also during driving the monopile deeper into the seabed using pile driving equipment.

The motion compensating support assembly 201 comprises controllable motion actuators 206, 207 (see also WO2018/117846) and an associated motion control unit 205 configured for position control of the monopile 10 during landing of the pile on the seabed and control of verticality of the monopile during driving of the monopile into the seabed so as to compensate for vessel motion.

The pile holder 202 is provided with a pile foot end support 209 that is configured to engage with the foot end of a monopile 10 in order to limit longitudinal movement of the pile, at least during upending of the pile.

Generally, the installation of a monopile 10 involves, with the hull 2 of the vessel 1 in floating condition, the steps of:
- receiving the lower end portion of a monopile 10 in the pile holder 202 while being in a horizontal orientation,
- upending the monopile 10 by lifting an upper end portion of the monopile by means of the crane 100 while the lower end portion remains received and supported by the pile holder 202, so that the monopile is upended in vertical orientation thereof,
- lowering the upended monopile 10 by means of the crane 100 whilst being guided by the pile holder 202 so that the monopile is landed on the seabed,
- driving the monopile 10 deeper into the seabed, e.g. involving the use of pile driving equipment.

As discussed herein, during at least a phase of the upending of the monopile, one or more of the controllable motion actuators, e.g. one or more actuators 206 causing motion generally parallel to the tilt axis 203, of the motion compensating support assembly are operated to provide controlled motion of the lower end portion of the monopile 10 so as to reduce swing motion of the monopile.

The movements of the lower end portion of the monopile 10 are deliberately brought about during (at least a phase of) the monopile upending process, so as to reduce swing motion of the monopile 10. Here, the motions are directly substantially parallel to the tilt axis, e.g. a reciprocating (periodic) motion.

As preferred, the motion control unit is configured, e.g. programmed, to operate one or more of the controllable motion actuators 206 of the motion compensating support assembly in order to perform an anti-swing routine during at least a part of upending process of the monopile so as to reduce swing motion of the monopile.

As preferred, a swing motion sensing system is provided that is configured and operated to sense actual swing motion of the monopile, at least during the phase of the upending process of the monopile, which swing motion sensing system is linked to the motion control unit of the motion compensated pile gripper to provide input signal(s) for the anti-swing routine.

As preferred, the device 200, e.g. the motion compensating support assembly 201 thereof, is provided with one or more position sensors that are linked to the motion control unit, e.g. in view of a position feedback, e.g. in view of position based control of the lower monopile end during upending to reduce swing motion.

In embodiments, the device 200, e.g. the motion compensating support assembly 201 thereof, is provided with sensors that sense one or more of loads exerted on the device 200 by the lower monopile end, which sensors are linked to the motion control unit, e.g. in view of a force feedback, e.g. in view of force based control of the lower monopile end during upending to reduce swing motion.

In embodiments, the device 200 is provided with one or more angle measurement sensors that measure the actual tilt angle during upending of the monopile 10, which sensors are linked to the motion control unit in view of control of the lower monopile end during upending to reduce swing motion.

In embodiments, the motion control unit is linked to sensors providing actual data related to one or more of: vessel motion, vessel position, operation of the dynamic positioning system, vessel stability, operation of the ballast system.

It will be appreciated that the device 200 can be replaced for an embodiment, wherein the support assembly comprises one or more horizontal hull mounted rails mounted on the hull of the vessel, e.g. on a deck thereof, e.g. X - rails extending horizontally and in a longitudinal direction of the hull of the vessel, wherein a subframe is movable over said one or more hull mounted rails, wherein one or more subframe mounted rails are mounted on said subframe and perpendicular to the hull mounted rails, e.g. one or more Y-rails extending horizontally and in transverse direction of the hull of the vessel, wherein a support frame is movable over said subframe mounted rails, and wherein the pile holder is tiltable mounted on the support frame to tilt about the tilt axis, wherein controllable motion actuators of the support assembly are configured to move said subframe over the hull mounted rails and to move the support frame over the subframe mounted rails. For example, the device 200 is embodied as shown in WO2021/058544.

The device 200 may be mounted at the stern of the vessel, e.g. as shown, but other arrangements of the device 200, the crane, and/or the storage of monopiles on the vessel (if present) are also possible. For example, in embodiments, the monopiles are stored transverse to the hull of the vessel, e.g. the top of the monopiles being located outside of the side of the hull of the vessel. For example, the device 200 and/or the crane are arranged along the portside or starboard-side of the hull.

## Claims

1. A method for installation of a monopile (10) adapted to support an offshore wind turbine, wherein use is made of an installation vessel (1) comprising:
- a hull (2),
- a crane (100) mounted on the hull (2),
- a motion compensating integrated pile upending and holding device (200), the device comprising:
- a motion compensating support assembly (201) mounted to the hull (2) of the vessel (1),
- a pile holder (202) that is supported by the support assembly (201) and is tiltable about a tilt axis (203) relative to the support assembly (201) between a horizontal orientation and a vertical orientation,
wherein the pile holder (202) is configured to receive a lower end portion of the monopile (10) in a horizontal orientation thereof and to support the lower end portion,
wherein the device (200) is configured to allow for upending of the monopile (10) into a vertical orientation thereof by means of the crane (100) of the vessel (1) whilst the lower end portion remains received and supported by the pile holder (202),
wherein the pile holder (202) is configured to guide the monopile (10) in said vertical orientation, at least as the monopile (10) is being lowered by the crane (100) during landing of the monopile (10) on the seabed,
wherein the motion compensating support assembly (201) comprises controllable motion actuators (206, 207) and an associated motion control unit (205) configured for position control of the monopile (10) during landing of the monopile (10) on the seabed and/or control of verticality of the monopile (10) during driving of the monopile (10) into the seabed so as to compensate for vessel motion,
wherein the method comprises, with the hull (2) of the vessel (1) in floating condition:
- receiving the lower end portion of a monopile (10) in the pile holder (202) while being in a horizontal orientation,
- upending the monopile (10) by lifting an upper end portion of the monopile (10) by means of the crane (100) while the lower end portion remains received and supported by the pile holder (202), so that the monopile (10) is upended into vertical orientation thereof,
- lowering the upended monopile (10) by means of the crane (100) whilst being guided by the pile holder (202) so that the monopile (10) is landed on the seabed,
- driving the monopile (10) deeper into the seabed, e.g. involving the use of pile driving equipment,
**characterized in that** during at least a phase of the upending of the monopile (10), one or more of the controllable motion actuators (206,207) of the motion compensating support assembly (201) are operated to provide controlled motion of the lower end portion of the monopile (10) so as to reduce swing motion of the monopile (10).

2. Method according to claim 1, wherein the controlled motion of the lower end portion of the monopile (10) so as to reduce swing motion of the monopile (10) is directed substantially parallel to the tilt axis (203), e.g. a reciprocating, e.g. a periodic, motion, e.g. wherein the support assembly (201) comprises a frame, e.g. a subframe, that is movable over one or more rails relative to the hull (2) of the vessel (1), which rails extend parallel to the tilt axis (203), wherein the one or more motion actuators (206, 207) operated in order to reduce monopile swing are mounted to move said frame over said rails, and thus the lower end portion of the monopile (10) parallel to the tilt axis (203) to reduce swing of the monopile (10).

3. Method according to claim 1 or 2, wherein the motion control unit (205) is configured, e.g. programmed, to operate the one or more of the controllable motion actuators (206, 207) of the motion compensating support assembly (201) in order to perform an anti-swing routine during at least a part of upending process of the monopile (10) so as to reduce swing motion of the monopile (10).

4. Method according to any one or more of claims 1 - 3, wherein a swing motion sensing system is provided that is configured and operated to sense actual swing motion of the monopile (10), at least during said phase of the upending process of the monopile (10), which swing motion sensing system is linked to the motion control unit (205) of the motion compensated pile gripper to provide input signal(s) for an anti-swing routine.

5. Method according to any one or more of claims 1 - 4, wherein the motion compensating integrated pile upending and holding device (200), e.g. the motion compensating support assembly (201) thereof, is provided with one or more position sensors that are linked to the motion control unit (205), e.g. in view of a position feedback, e.g. in view of position based control of the lower monopile end during upending to reduce swing motion.

6. Method according to any one or more of claims 1 - 5, wherein the motion compensating integrated pile upending and holding device (200), e.g. the motion compensating support assembly (201) thereof, is provided with load sensors that sense one or more of loads exerted on the device (200) by the lower monopile end, which sensors are linked to the motion control unit (205), e.g. in view of a force feedback, e.g. in view of force based control of the lower monopile end during upending to reduce swing motion.

7. Method according to any one or more of claims 1 - 6, wherein the support assembly (201) comprises one or more horizontal hull mounted rails mounted on the hull (2) of the vessel (1), e.g. on a deck (3) thereof, e.g. X - rails extending horizontally and in a longitudinal direction of the hull (2) of the vessel (1), wherein a subframe is movable over said one or more hull mounted rails, wherein one or more subframe mounted rails are mounted on said subframe and perpendicular to the hull mounted rails, e.g. one or more Y-rails extending horizontally and in transverse direction of the hull (2) of the vessel (1), wherein a support frame is movable over said subframe mounted rails, and wherein the pile holder (202) is tiltable mounted on the support frame to tilt about the tilt axis (203), wherein controllable motion actuators (206, 207) of the support assembly (201) are configured to move said subframe over the hull mounted rails and to move the support frame over the subframe mounted rails.

8. An installation vessel (1) configured for installation of a monopile (10) adapted to support an offshore wind turbine, wherein the installation vessel (1) comprises:
- a hull (2),
- a crane (100) mounted on the hull (2),
- a motion compensating integrated pile upending and holding device (200), the device comprising:
- a motion compensating support assembly (201) mounted to the hull (2) of the vessel (1),
- a pile holder (202) that is supported by the support assembly (201) and is tiltable about tilt axis (203) relative to the support assembly (201) between a horizontal orientation and a vertical orientation,
wherein the pile holder (202) is configured to receive a lower end portion of the monopile (10) in a horizontal orientation thereof and to support the lower end portion,
wherein the device is configured to allow for upending of the monopile (10) into a vertical orientation thereof by means of the crane (100) of the vessel (1) whilst the lower end portion remains received and supported by the pile holder (202),
wherein the pile holder (202) is configured to guide the monopile (10) in said vertical orientation, at least as the monopile (10) is being lowered by the crane (100) during landing of the monopile (10) on the seabed,
wherein the motion compensating support assembly (201) comprises controllable motion actuators (206, 207) and an associated motion control unit (205) configured for position control of the monopile (10) during landing of the monopile (10) on the seabed and/or control of verticality of the monopile (10) during driving of the monopile (10) into the seabed so as to compensate for vessel motion,
**characterized in that** the motion control unit (205) is configured, e.g. programmed, to operate one or more of the controllable motion actuators (206, 207) of the motion compensating support assembly (201) in order to perform an anti-swing routine during at least a phase of upending process of the monopile (10) so as to reduce swing motion of the monopile (10).

9. Vessel according to claim 8, wherein the movements of the lower end portion of the monopile (10) so as to reduce swing motion of the monopile (10) are directed substantially parallel to the tilt axis (203), e.g. a reciprocating, e.g. periodic, motion,
e.g. wherein the support assembly (201) comprises a frame, e.g. a subframe, that is movable over one or more rails relative to the hull (2) of the vessel (1), which rails extend parallel to the tilt axis (203), wherein the one or more motion actuators (206, 207) operated to reduce monopile swing are mounted to move said frame over said rails, and thus the lower end portion of the monopile (10) parallel to the tilt axis (203) to reduce swing of the monopile (10).

10. Vessel according to claim 8 or 9, wherein a swing motion sensing system is provided that is configured and operated to sense actual swing motion of the monopile (10), at least during said phase of the upending process of the monopile (10), which swing motion sensing system is linked to the motion control unit (205) of the motion compensated pile gripper to provide input signal(s) for the anti-swing routine.

11. Vessel according to any one or more of claims 8 - 10, wherein the motion compensating integrated pile upending and holding device (200), e.g. the motion compensating support assembly (201) thereof, is provided with one or more position sensors that are linked to the motion control unit (205), e.g. in view of a position feedback, e.g. in view of position based control of the lower monopile end during upending to reduce swing motion.

12. Vessel according to any one or more of claims 8 - 11, wherein the motion compensating integrated pile upending and holding device (200), e.g. the motion compensating support assembly (201) thereof, is provided with load sensors that sense one or more of loads exerted on the device by the lower monopile end, which sensors are linked to the motion control unit (205), e.g. in view of a force feedback, e.g. in view of force based control of the lower monopile end during upending to reduce swing motion.

13. Vessel according to any one or more of claims 8 - 12, wherein the motion compensating integrated pile upending and holding device (200) is provided with one or more angle measurement sensors that measure the actual tilt angle during upending of the monopile (10), which sensors are linked to the motion control unit (205) in view of control of the lower monopile end during upending to reduce swing motion.

14. Vessel according to any one or more of claims 8 - 13, wherein the motion control unit (205) is linked to sensors providing actual data related to one or more of: vessel motion, vessel position, operation of the dynamic positioning system, vessel stability, operation of the ballast system.

15. Vessel according to any one or more of claims 8 - 14, wherein the support assembly (201) comprises one or more horizontal hull mounted rails mounted on the hull (2) of the vessel (1), e.g. on a deck (3) thereof, e.g. X - rails extending horizontally and in a longitudinal direction of the hull (2) of the vessel (1), wherein a subframe is movable over said one or more hull mounted rails, wherein one or more subframe mounted rails are mounted on said subframe and perpendicular to the hull mounted rails, e.g. one or more Y-rails extending horizontally and in transverse direction of the hull (2) of the vessel (1), wherein a support frame is movable over said subframe mounted rails, and wherein the pile holder (202) is tiltable mounted on the support frame to tilt about the tilt axis (203), wherein controllable motion actuators (206, 207) of the support assembly (201) are configured to move said subframe over the hull mounted rails and to move the support frame over the subframe mounted rails.

## Patentansprüche

1. Verfahren zur Installation einer Monopile (10) zur Unterstützung einer Offshore-Windturbine, wobei ein Installationsschiff (1) verwendet wird, das Folgendes umfasst:
- einen Rumpf (2),
- einen Kran (100), der am Rumpf (2) montiert ist,
- eine bewegungskompensierende integrierte Pfahlaufricht- und -haltevorrichtung (200), wobei die Vorrichtung Folgendes umfasst:
- eine am Rumpf (2) des Schiffes (1) montierte bewegungskompensierende Stützanordnung (201),
- einen Pfahlhalter (202), der von der Stützanordnung (201) getragen wird und um eine Kippachse (203) relativ zu der Stützanordnung (201) zwischen einer horizontalen Ausrichtung und einer vertikalen Ausrichtung kippbar ist, wobei der Pfahlhalter (202) dazu ausgelegt ist, einen unteren Endabschnitt der Monopile (10) in einer horizontalen Ausrichtung davon aufzunehmen und den unteren Endabschnitt zu stützen,
wobei die Vorrichtung (200) dazu ausgelegt ist, ein Aufrichten der Monopile (10) in eine vertikale Ausrichtung davon mittels des Krans (100) des Schiffes (1) zu ermöglichen, während der untere Endabschnitt von dem Pfahlhalter (202) aufgenommen und gestützt bleibt,
wobei der Pfahlhalter (202) dazu ausgelegt ist, die Monopile (10) in der vertikalen Ausrichtung zu führen, zumindest während die Monopile (10) durch den Kran (100) während der Landung der Monopile (10) auf dem Meeresboden abgesenkt wird,
wobei die bewegungskompensierende Stützanordnung (201) steuerbare Bewegungsaktuatoren (206, 207) und eine assoziierte Bewegungssteuereinheit (205) umfasst, die ausgelegt ist zur Positionssteuerung der Monopile (10) während der Landung der Monopile (10) auf dem Meeresboden und/oder zur Steuerung der Vertikalität der Monopile (10) während des Treibens der Monopile (10) in den Meeresboden, um eine Schiffsbewegung zu kompensieren,
wobei das Verfahren Folgendes umfasst, wenn sich der Rumpf (2) des Schiffes (1) im schwimmenden Zustand befindet:
- Aufnehmen des unteren Endabschnitts einer Monopile (10) in dem Pfahlhalter (202) in horizontaler Ausrichtung;
- Aufrichten der Monopile (10) durch Anheben eines oberen Endabschnitts der Monopile (10) mittels des Krans (100), während der untere Endabschnitt von dem Pfahlhalter (202) aufgenommen und abgestützt bleibt, so dass die Monopile (10) in ihre vertikale Ausrichtung aufgerichtet wird;
- Absenken der aufgerichteten Monopile (10) mittels des Krans (100), während sie durch den Pfahlhalter (202) geführt wird, so dass die Monopile (10) auf dem Meeresboden gelandet wird;
- Treiben der Monopile (10) tiefer in den Meeresboden, z. B. unter Verwendung von Pfahltreibeausrüstung;
**dadurch gekennzeichnet, dass** während mindestens einer Phase des Aufrichtens der Monopile (10) einer oder mehrere der steuerbaren Bewegungsaktuatoren (206, 207) der bewegungskompensierenden Stützanordnung (201) betätigt werden, um eine gesteuerte Bewegung des unteren Endabschnitts der Monopile (10) bereitzustellen, um eine Pendelbewegung der Monopile (10) zu reduzieren.

2. Verfahren nach Anspruch 1, wobei die gesteuerte Bewegung des unteren Endabschnitts der Monopile (10), um eine Pendelbewegung der Monopile (10) zu reduzieren, im Wesentlichen parallel zu der Kippachse (203) gerichtet ist, z. B. eine hin- und hergehende, z. B. periodische Bewegung, wobei z. B. die Stützanordnung (201) einen Rahmen, z. B. einen Unterrahmen, umfasst, der über eine oder mehrere Schienen relativ zum Rumpf (2) des Schiffes (1) beweglich ist, wobei sich die Schienen parallel zu der Kippachse (203) erstrecken, wobei der eine oder die mehreren Bewegungsaktuatoren (206, 207), die betätigt werden, um die Pendelbewegung der Monopile zu reduzieren, montiert sind, um den Rahmen über die Schienen, und somit den unteren Endabschnitt der Monopile (10) parallel zu der Kippachse (203) zu bewegen, um die Pendelbewegung der Monopile (10) zu reduzieren.

3. Verfahren nach Anspruch 1 oder 2, wobei die Bewegungssteuereinheit (205) dazu ausgelegt, z. B. programmiert ist, den einen oder die mehreren der steuerbaren Bewegungsaktuatoren (206, 207) der bewegungskompensierenden Stützanordnung (201) zu betreiben, um eine Pendelverhinderungsroutine während mindestens eines Teils des Aufrichtprozesses der Monopile (10) durchzuführen, um so die Pendelbewegung der Monopile (10) zu reduzieren.

4. Verfahren nach einem oder mehreren der Ansprüche 1 **-** 3, wobei ein Pendelbewegungserfassungssystem bereitgestellt wird, das dazu ausgelegt ist und betrieben wird, eine tatsächliche Pendelbewegung der Monopile (10) zumindest während der Phase des Aufrichtprozesses der Monopile (10) zu erfassen, wobei das Pendelbewegungserfassungssystem mit der Bewegungssteuereinheit (205) des bewegungskompensierten Pfahlgreifers verbunden ist, um ein oder mehrere Eingangssignale für eine Pendelverhinderungsroutine bereitzustellen.

5. Verfahren nach einem oder mehreren der Ansprüche 1 **-** 4, wobei die bewegungskompensierende integrierte Pfahlaufricht- und -haltevorrichtung (200), z. B. die bewegungskompensierende Stützanordnung (201) davon, mit einem oder mehreren Positionssensoren versehen ist, die mit der Bewegungssteuereinheit (205) verbunden sind, z. B. im Hinblick auf eine Positionsrückmeldung, z. B. im Hinblick auf eine positionsbasierte Steuerung des unteren Endes der Monopile während des Aufrichtens, um eine Pendelbewegung zu reduzieren.

6. Verfahren nach einem oder mehreren der Ansprüche 1 **-** 5, wobei die bewegungskompensierende integrierte Pfahlaufricht- und -haltevorrichtung (200), z. B. die bewegungskompensierende Stützanordnung (201) davon, mit Lastsensoren versehen ist, die eine oder mehrere von Lasten erfassen, die durch das untere Ende der Monopile auf die Vorrichtung (200) ausgeübt werden, wobei die Sensoren mit der Bewegungssteuereinheit (205) verbunden sind, z. B. im Hinblick auf eine Kraftrückmeldung, z. B. im Hinblick auf eine kraftbasierte Steuerung des unteren Endes der Monopile während des Aufrichtens, um eine Pendelbewegung zu reduzieren.

7. Verfahren nach einem oder mehreren der Ansprüche 1 **-** 6, wobei die Stützanordnung (201) eine oder mehrere horizontale rumpfmontierte Schienen umfasst, die an dem Rumpf (2) des Schiffes (1) montiert sind, z. B. auf einem Deck (3) davon, z. B. X-Schienen, die sich horizontal und in einer Längsrichtung des Rumpfs (2) des Schiffes (1) erstrecken, wobei ein Unterrahmen über die eine oder die mehreren rumpfmontierten Schienen beweglich ist, wobei eine oder mehrere unterrahmenmontierte Schienen an dem Unterrahmen und senkrecht zu den rumpfmontierten Schienen montiert sind, z. B. eine oder mehrere Y-Schienen, die sich horizontal und in Querrichtung des Rumpfs (2) des Schiffes (1) erstrecken, wobei ein Stützrahmen über die unterrahmenmontierten Schienen beweglich ist, und wobei der Pfahlhalter (202) kippbar an dem Stützrahmen montiert ist, um um die Kippachse (203) zu kippen, wobei steuerbare Bewegungsaktuatoren (206, 207) der Stützanordnung (201) dazu ausgelegt sind, den Unterrahmen über die rumpfmontierten Schienen zu bewegen und den Stützrahmen über die unterrahmenmontierten Schienen zu bewegen.

8. Installationsschiff (1), ausgelegt zur Installation einer Monopile (10) zur Unterstützung einer Offshore-Windturbine, wobei das Installationsschiff (1) Folgendes umfasst:
- einen Rumpf (2),
- einen Kran (100), der am Rumpf (2) montiert ist,
- eine bewegungskompensierende integrierte Pfahlaufricht- und -haltevorrichtung (200), wobei die Vorrichtung Folgendes umfasst:
- eine am Rumpf (2) des Schiffes (1) montierte bewegungskompensierende Stützanordnung (201),
- einen Pfahlhalter (202), der von der Stützanordnung (201) getragen wird und um eine Kippachse (203) relativ zu der Stützanordnung (201) zwischen einer horizontalen Ausrichtung und einer vertikalen Ausrichtung kippbar ist, wobei der Pfahlhalter (202) dazu ausgelegt ist, einen unteren Endabschnitt der Monopile (10) in einer horizontalen Ausrichtung davon aufzunehmen und den unteren Endabschnitt zu stützen,
wobei die Vorrichtung dazu ausgelegt ist, ein Aufrichten der Monopile (10) in eine vertikale Ausrichtung davon mittels des Krans (100) des Schiffes (1) zu ermöglichen, während der untere Endabschnitt von dem Pfahlhalter (202) aufgenommen und gestützt bleibt,
wobei der Pfahlhalter (202) dazu ausgelegt ist, die Monopile (10) in der vertikalen Ausrichtung zu führen, zumindest während die Monopile (10) durch den Kran (100) während der Landung der Monopile (10) auf dem Meeresboden abgesenkt wird,
wobei die bewegungskompensierende Stützanordnung (201) steuerbare Bewegungsaktuatoren (206, 207) und eine assoziierte Bewegungssteuereinheit (205) umfasst, die ausgelegt ist zur Positionssteuerung der Monopile (10) während der Landung der Monopile (10) auf dem Meeresboden und/oder zur Steuerung der Vertikalität der Monopile (10) während des Treibens der Monopile (10) in den Meeresboden, um eine Schiffsbewegung zu kompensieren, **dadurch gekennzeichnet, dass** die Bewegungssteuereinheit (205) dazu ausgelegt, z. B. programmiert ist, den einen oder die mehreren der steuerbaren Bewegungsaktuatoren (206, 207) der bewegungskompensierenden Stützanordnung (201) zu betreiben, um eine Pendelverhinderungsroutine während mindestens einer Phase des Aufrichtprozesses der Monopile (10) durchzuführen, um so die Pendelbewegung der Monopile (10) zu reduzieren.

9. Schiff nach Anspruch 8, wobei die Bewegungen des unteren Endabschnitts der Monopile (10), um eine Pendelbewegung der Monopile (10) zu reduzieren, im Wesentlichen parallel zu der Kippachse (203) gerichtet sind, z. B. eine hin- und hergehende, z. B. periodische, Bewegung,
wobei z. B. die Stützanordnung (201) einen Rahmen, z. B. einen Unterrahmen, umfasst, der über eine oder mehrere Schienen relativ zu dem Rumpf (2) des Schiffes (1) beweglich ist, wobei sich die Schienen parallel zu der Kippachse (203) erstrecken, wobei der eine oder die mehreren Bewegungsaktuatoren (206, 207), die zum Reduzieren des Pendelns der Monopile betätigt werden, montiert sind, um den Rahmen über die Schienen, und somit den unteren Endabschnitt der Monopile (10) parallel zu der Kippachse (203) zu bewegen, um das Pendeln der Monopile (10) zu reduzieren.

10. Schiff nach Anspruch 8 oder 9, wobei ein Pendelbewegungserfassungssystem bereitgestellt wird, das dazu ausgelegt ist und betrieben wird, eine tatsächliche Pendelbewegung der Monopile (10) zumindest während der Phase des Aufrichtprozesses der Monopile (10) zu erfassen, wobei das Pendelbewegungserfassungssystem mit der Bewegungssteuereinheit (205) des bewegungskompensierten Pfahlgreifers verbunden ist, um ein oder mehrere Eingangssignale für die Pendelverhinderungsroutine bereitzustellen.

11. Schiff nach einem oder mehreren der Ansprüche 8 - 10, wobei die bewegungskompensierende integrierte Pfahlaufricht- und -haltevorrichtung (200), z. B. die bewegungskompensierende Stützanordnung (201) davon, mit einem oder mehreren Positionssensoren versehen ist, die mit der Bewegungssteuereinheit (205) verbunden sind, z. B. im Hinblick auf eine Positionsrückmeldung, z. B. im Hinblick auf eine positionsbasierte Steuerung des unteren Endes der Monopile während des Aufrichtens, um eine Pendelbewegung zu reduzieren.

12. Schiff nach einem oder mehreren der Ansprüche 8 - 11, wobei die bewegungskompensierende integrierte Pfahlaufricht- und -haltevorrichtung (200), z. B. die bewegungskompensierende Stützanordnung (201) davon, mit Lastsensoren versehen ist, die eine oder mehrere von Lasten erfassen, die durch das untere Ende der Monopile auf die Vorrichtung ausgeübt werden, wobei die Sensoren mit der Bewegungssteuereinheit (205) verbunden sind, z. B. im Hinblick auf eine Kraftrückmeldung, z. B. im Hinblick auf eine kraftbasierte Steuerung des unteren Endes der Monopile während des Aufrichtens, um eine Pendelbewegung zu reduzieren.

13. Schiff nach einem oder mehreren der Ansprüche 8 - 12, wobei die bewegungskompensierende integrierte Pfahlaufricht- und -haltevorrichtung (200) mit einem oder mehreren Winkelmesssensoren versehen ist, die den tatsächlichen Neigungswinkel während des Aufrichtens der Monopile (10) messen, wobei die Sensoren mit der Bewegungssteuereinheit (205) im Hinblick auf die Steuerung des unteren Endes der Monopile während des Aufrichtens verbunden sind, um die Pendelbewegung zu reduzieren.

14. Schiff nach einem oder mehreren der Ansprüche 8 - 13, wobei die Bewegungssteuereinheit (205) mit Sensoren verbunden ist, die tatsächliche Daten in Bezug auf eines oder mehrere von Folgendem bereitstellen: Schiffsbewegung, Schiffsposition, Betrieb des dynamischen Positionsbestimmungssystems, Schiffsstabilität, Betrieb des Ballastsystems.

15. Schiff nach einem oder mehreren der Ansprüche 8 - 14, wobei die Stützanordnung (201) eine oder mehrere horizontale rumpfmontierte Schienen umfasst, die an dem Rumpf (2) des Schiffes (1) montiert sind, z. B. auf einem Deck (3) davon, z. B. X-Schienen, die sich horizontal und in einer Längsrichtung des Rumpfs (2) des Schiffes (1) erstrecken, wobei ein Unterrahmen über die eine oder die mehreren rumpfmontierten Schienen beweglich ist, wobei eine oder mehrere unterrahmenmontierte Schienen an dem Unterrahmen und senkrecht zu den rumpfmontierten Schienen montiert sind, z. B. eine oder mehrere Y-Schienen, die sich horizontal und in Querrichtung des Rumpfs (2) des Schiffes (1) erstrecken, wobei ein Stützrahmen über die unterrahmenmontierten Schienen beweglich ist, und wobei der Pfahlhalter (202) kippbar an dem Stützrahmen montiert ist, um um die Kippachse (203) zu kippen, wobei steuerbare Bewegungsaktuatoren (206, 207) der Stützanordnung (201) dazu ausgelegt sind, den Unterrahmen über die rumpfmontierten Schienen zu bewegen und den Stützrahmen über die unterrahmenmontierten Schienen zu bewegen.

## Revendications

1. Procédé d'installation d'un monopieu (10) conçu pour supporter une éolienne en mer, dans lequel un bâtiment d'installation (1) est utilisé, comprenant :
- une coque (2),
- une grue (100) montée sur la coque (2),
- un dispositif de redressement et de retenue de pieu intégré à compensation de mouvement (200), le dispositif comprenant :
- un ensemble de support à compensation de mouvement (201) monté sur la coque (2) du bâtiment (1),
- un support de pieu (202) qui est supporté par l'ensemble de support (201) et peut être incliné autour d'un axe d'inclinaison (203) par rapport à l'ensemble de support (201) entre une orientation horizontale et une orientation verticale,
dans lequel le support de pieu (202) est conçu pour recevoir une partie d'extrémité inférieure du monopieu (10) dans une orientation horizontale et pour supporter la partie d'extrémité inférieure,
dans lequel le dispositif (200) est conçu pour permettre le redressement du monopieu (10) dans une orientation verticale au moyen de la grue (100) du bâtiment (1) tandis que la partie d'extrémité inférieure reste reçue et supportée par le support de pieu (202),
dans lequel le support de pieu (202) est conçu pour guider le monopieu (10) dans ladite orientation verticale, au moins lorsque le monopieu (10) est abaissé par la grue (100) pendant l'atterrissage du monopieu (10) sur le fond marin,
dans lequel l'ensemble de support à compensation de mouvement (201) comprend des actionneurs de mouvement pouvant être commandés (206, 207) et une unité de commande de mouvement (205) associée configurée pour la commande de position du monopieu (10) pendant l'atterrissage du monopieu (10) sur le fond marin et/ou la commande de la verticalité du monopieu (10) pendant l'entraînement du monopieu (10) vers le fond marin de façon à compenser le mouvement du bâtiment,
dans lequel le procédé comprend, la coque (2) du bâtiment (1) étant dans un état flottant :
- la réception de la partie d'extrémité inférieure d'un monopieu (10) dans le support de pieu (202) dans une orientation horizontale,
- le redressement du monopieu (10) par soulèvement d'une partie d'extrémité supérieure du monopieu (10) au moyen de la grue (100) tandis que la partie d'extrémité inférieure reste reçue et supportée par le support de pieu (202), de telle sorte que le monopieu (10) est redressé dans son orientation verticale,
- l'abaissement du monopieu (10) redressé au moyen de la grue (100) tandis qu'il est guidé par le support de pieu (202) de telle sorte que le monopieu (10) atterrit sur le fond marin,
- l'entraînement du monopieu (10) plus profondément dans le fond marin, par exemple au moyen d'un équipement d'entraînement de pieu,
**caractérisé en ce que** pendant au moins une phase du redressement du monopieu (10), un ou plusieurs des actionneurs pouvant être commandés (206, 207) de l'ensemble de support à compensation de mouvement (201) sont actionnés pour produire un mouvement commandé de la partie d'extrémité inférieure du monopieu (10) de façon à réduire le mouvement de balancement du monopieu (10).

2. Procédé selon la revendication 1, dans lequel le mouvement commandé de la partie d'extrémité inférieure du monopieu (10) visant à réduire le mouvement de balancement du monopieu (10) est dirigé sensiblement parallèlement à l'axe d'inclinaison (203), par exemple en un mouvement de va-et-vient, par exemple un mouvement périodique, par exemple dans lequel l'ensemble de support (201) comprend une structure, par exemple une sous-structure, qui est mobile sur un ou plusieurs rails par rapport à la coque (2) du bâtiment (1), lesquels rails s'étendent parallèlement à l'axe d'inclinaison (203), dans lequel le ou les actionneurs de mouvement (206, 207) actionnés afin de réduire le balancement du monopieu sont montés pour déplacer ladite structure sur lesdits rails, et donc la partie d'extrémité inférieure du monopieu (10) parallèlement à l'axe d'inclinaison (203) pour réduire le balancement du monopieu (10).

3. Procédé selon la revendication 1 ou 2, dans lequel l'unité de commande de mouvement (205) est configurée, par exemple programmée, pour actionner le ou les actionneurs de mouvement pouvant être commandés (206, 207) de l'ensemble de support à compensation de mouvement (201) afin d'exécuter un programme anti-balancement pendant au moins une partie du processus de redressement du monopieu (10) de façon à réduire le mouvement de balancement du monopieu (10).

4. Procédé selon l'une quelconque des revendications 1 à 3, dans lequel un système de détection de mouvement de balancement est fourni, configuré et actionné pour détecter un mouvement de balancement réel du monopieu (10), au moins pendant ladite phase du processus de redressement du monopieu (10), lequel système de détection de mouvement de balancement est relié à l'unité de commande de mouvement (205) du dispositif de préhension de pieu à compensation de mouvement pour produire un ou des signaux d'entrée pour un programme anti-balancement.

5. Procédé selon l'une quelconque des revendications 1 à 4, dans lequel le dispositif de redressement et de retenue de pieu intégré à compensation de mouvement (200), par exemple l'ensemble de support à compensation de mouvement (201) de celui-ci, est doté d'un ou plusieurs capteurs de position qui sont reliés à l'unité de commande de mouvement (205), par exemple en vue d'un retour d'informations de position, par exemple en vue d'une commande basée sur la position de l'extrémité inférieure du monopieu pendant le redressement pour réduire le mouvement de balancement.

6. Procédé selon l'une quelconque des revendications 1 à 5, dans lequel le dispositif de redressement et de retenue de pieu intégré à compensation de mouvement (200), par exemple l'ensemble de support à compensation de mouvement (201) de celui-ci, est doté de capteurs de charge qui détectent une ou plusieurs charges exercées sur le dispositif (200) par l'extrémité inférieure du monopieu, lesquels capteurs sont reliés à l'unité de commande de mouvement (205), par exemple en vue d'un retour d'informations de position, par exemple en vue d'une commande basée sur la force de l'extrémité inférieure du monopieu pendant le redressement pour réduire le mouvement de balancement.

7. Procédé selon l'une quelconque des revendications 1 à 6, dans lequel l'ensemble de support (201) comprend un ou plusieurs rails de coque horizontaux montés sur la coque (2) du bâtiment (1), par exemple sur un pont (3) de celui-ci, par exemple des rails en X s'étendant horizontalement et dans une direction longitudinale de la coque (2) du bâtiment (1), dans lequel une sous-structure est mobile sur ledit ou lesdits rails montés sur la coque, dans lequel un ou plusieurs rails montés sur la sous-structure sont montés sur ladite sous-structure et sont perpendiculaires aux rails montés sur la coque, par exemple un plusieurs rails en Y s'étendant horizontalement et dans la direction transversale de la coque (2) du bâtiment (1), dans lequel une structure de support est mobile sur lesdits rails montés sur la sous-structure, et dans lequel le support de pieu (202) est monté de façon à pouvoir être incliné sur la structure de support pour s'incliner autour de l'axe d'inclinaison (203), dans lequel les actionneurs de mouvement pouvant être commandés (206, 207) de l'ensemble de support (201) sont conçus pour déplacer ladite sous-structure sur les rails montés sur la coque et pour déplacer la structure de support sur les rails montés sur la sous-structure.

8. Bâtiment d'installation (1) conçu pour l'installation d'un monopieu (10)) conçu pour supporter une éolienne en mer, dans lequel le bâtiment d'installation (1) comprend :
- une coque (2),
- une grue (100) montée sur la coque (2),
- un dispositif de redressement et de retenue de pieu intégré à compensation de mouvement (200), le dispositif comprenant :
- un ensemble de support à compensation de mouvement (201) monté sur la coque (2) du bâtiment (1),
- un support de pieu (202) qui est supporté par l'ensemble de support (201) et peut être incliné autour d'un axe d'inclinaison (203) par rapport à l'ensemble de support (201) entre une orientation horizontale et une orientation verticale,
dans lequel le support de pieu (202) est conçu pour recevoir une partie d'extrémité inférieure du monopieu (10) dans une orientation horizontale et pour supporter la partie d'extrémité inférieure,
dans lequel le dispositif est conçu pour permettre le redressement du monopieu (10) dans une orientation verticale au moyen de la grue (100) du bâtiment (1) tandis que la partie d'extrémité inférieure reste reçue et supportée par le support de pieu (202),
dans lequel le support de pieu (202) est conçu pour guider le monopieu (10) dans ladite orientation verticale, au moins lorsque le monopieu (10) est abaissé par la grue (100) pendant l'atterrissage du monopieu (10) sur le fond marin,
dans lequel l'ensemble de support à compensation de mouvement (201) comprend des actionneurs de mouvement pouvant être commandés (206, 207) et une unité de commande de mouvement (205) associée configurée pour la commande de position du monopieu (10) pendant l'atterrissage du monopieu (10) sur le fond marin et/ou la commande de la verticalité du monopieu (10) pendant l'entraînement du monopieu (10) vers le fond marin de façon à compenser le mouvement du bâtiment,
**caractérisé en ce que** l'unité de commande de mouvement (205) est configurée, par exemple programmée, pour actionner le ou les actionneurs de mouvement pouvant être commandés (206, 207) de l'ensemble de support à compensation de mouvement (201) afin d'exécuter un programme anti-balancement pendant au moins une phase du processus de redressement du monopieu (10) de façon à réduire le mouvement de balancement du monopieu (10).

9. Bâtiment selon la revendication 8, dans lequel les mouvements de la partie d'extrémité inférieure du monopieu (10) destinés à réduire le mouvement de balancement du monopieu (10) sont dirigés sensiblement parallèlement à l'axe d'inclinaison (203), par exemple en un mouvement de va-et-vient, par exemple périodique, par exemple dans lequel l'ensemble de support (201) comprend une structure, par exemple une sous-structure, qui est mobile sur un ou plusieurs rails par rapport à la coque (2) du bâtiment (1), lesquels rails s'étendent parallèlement à l'axe d'inclinaison (203), dans lequel le ou les actionneurs de mouvement (206, 207) actionnés afin de réduire le balancement du monopieu sont montés pour déplacer ladite structure sur lesdits rails, et donc la partie d'extrémité inférieure du monopieu (10) parallèlement à l'axe d'inclinaison (203)pour réduire le balancement du monopieu (10).

10. Bâtiment selon la revendication 8 ou 9, dans lequel un système de détection de mouvement de balancement est fourni, configuré et actionné pour détecter un mouvement de balancement réel du monopieu (10), au moins pendant ladite phase du processus de redressement du monopieu (10), lequel système de détection de mouvement de balancement est relié à l'unité de commande de mouvement (205) du dispositif de préhension de pieu à compensation de mouvement pour produire un ou des signaux d'entrée pour le programme anti-balancement.

11. Bâtiment selon l'une quelconque des revendications 8 à 10, dans lequel le dispositif de redressement et de retenue de pieu intégré à compensation de mouvement (200), par exemple l'ensemble de support à compensation de mouvement (201) de celui-ci, est doté d'un ou plusieurs capteurs de position qui sont reliés à l'unité de commande de mouvement (205), par exemple en vue d'un retour d'informations de position, par exemple en vue d'une commande basée sur la position de l'extrémité inférieure du monopieu pendant le redressement pour réduire le mouvement de balancement.

12. Bâtiment selon l'une quelconque des revendications 8 à 11, dans lequel le dispositif de redressement et de retenue de pieu intégré à compensation de mouvement (200), par exemple l'ensemble de support à compensation de mouvement (201) de celui-ci, est doté de capteurs de charge qui détectent une ou plusieurs charges exercées sur le dispositif par l'extrémité inférieure du monopieu, lesquels capteurs sont reliés à l'unité de commande de mouvement (205), par exemple en vue d'un retour d'informations de position, par exemple en vue d'une commande basée sur la force de l'extrémité inférieure du monopieu pendant le redressement pour réduire le mouvement de balancement.

13. Bâtiment selon l'une quelconque des revendications 8 à 12, dans lequel le dispositif de redressement et de retenue de pieu intégré à compensation de mouvement (200) est doté d'un ou plusieurs capteurs de mesure d'angle qui mesurent l'angle d'inclinaison réel pendant le redressement du monopieu (10), lesquels capteurs sont reliés à l'unité de commande de mouvement (205) en vue de la commande de l'extrémité inférieure du monopieu pendant le redressement pour réduire le mouvement de balancement.

14. Bâtiment selon l'une quelconque des revendications 8 à 13, dans lequel l'unité de commande de mouvement (205) est reliée à des capteurs fournissant des données réelles relatives à un ou plusieurs éléments parmi : le mouvement du bâtiment, la position du bâtiment, le fonctionnement du système de positionnement dynamique, la stabilité du bâtiment, le fonctionnement du système de ballast.

15. Bâtiment selon l'une quelconque des revendications 8 à 14, dans lequel l'ensemble de support (201) comprend un ou plusieurs rails de coque horizontaux montés sur la coque (2) du bâtiment (1), par exemple sur un point (3) de celui-ci, par exemple des rails en X s'étendant horizontalement et dans une direction longitudinale de la coque (2) du bâtiment (1), dans lequel une sous-structure est mobile sur ledit ou lesdits rails montés sur la coque, dans lequel un ou plusieurs rails montés sur la sous-structure sont montés sur ladite sous-structure et sont perpendiculaires aux rails montés sur la coque, par exemple un plusieurs rails en Y s'étendant horizontalement et dans la direction transversale de la coque (2) du bâtiment (1), dans lequel une structure de support est mobile sur lesdits rails montés sur la sous-structure, et dans lequel le support de pieu (202) est monté de façon à pouvoir être incliné sur la structure de support pour s'incliner autour de l'axe d'inclinaison (203), dans lequel les actionneurs de mouvement pouvant être commandés (206, 207) de l'ensemble de support (201) sont conçus pour déplacer ladite sous-structure sur les rails montés sur la coque et pour déplacer la structure de support sur les rails montés sur la sous-structure.
